# EUROPÄISCHE PATENTSCHRIFT

(11) **EP 0 794 929 B1**
(45) Veröffentlichungstag und Bekanntmachung des Hinweises auf die Patenterteilung: **28.07.1999**
(21) Anmeldenummer: 95940228.0
(22) Anmeldetag: 22.11.1995
(51) Int. Cl.: C04B 33/26, H01B 3/12

(54) **KORUNDPORZELLANMASSE, VERFAHREN ZU IHRER AUFBEREITUNG UND VERWENDUNG DER KORUNDPORZELLANMASSE**
CORUNDUM PORCELAIN COMPOSITION, METHOD FOR PREPARING IT AND USE OF THE CORUNDUM PORCELAIN COMPOSITION
COMPOSITION DE PORCELAINE ET DE CORINDOM, SON PROCEDE DE PREPARATION ET SON UTILISATION

(30) Priorität: 29.11.1994 DE 4442409
(43) Veröffentlichungstag der Anmeldung: 17.09.1997
(73) Patentinhaber: CeramTec AG Innovative Ceramic Engineering, 73207 Plochingen (DE)
(72) Erfinder: FASSBINDER, Gunter, D-95632 Wunsiedel (DE)
(74) Vertreter: Schulz, Wilfried, Dipl.-Ing.
(86) Internationale Anmeldenummer: EP9504592
(87) Internationale Veröffentlichungsnummer: WO9616915

(56) Entgegenhaltungen:
- EP-A- 0 189 260
- EP-A- 0 281 420
- DE-A- 3 444 627
- DATABASE WPI Week 9102 Derwent Publications Ltd., London, GB; AN 91-013785 & SU,A,1 544 751 (GEOR. POLY.) , 23.Februar 1990
- DATABASE WPI Week 9041 Derwent Publications Ltd., London, GB; AN 90-311404 & SU,A,1 530 615 (LENINGRAD LENSOVET TECH.) , 23.Dezember 1989

## Beschreibung

Die Erfindung betrifft eine Korundporzellanmasse, die mehrere anorganische Ausgangsmaterialien enthält. Die Zugabe von geringen Mengen an zerkleinerten Porzellanscherben zu Porzellanmassen für die Herstellung von Tafelporzellan ist bekannt. Bei der Herstellung von Tafelporzellan bewirkt die Zugabe von gemahlenen, gebrannten Porzellanscherben eine Erhöhung der Formstabilität der Formkörper beim Brand. Textureffekte spielen hier praktisch keine Rolle. Während die Teile eines Tafelporzellans dünnwandig sind und nur geringes Gewicht aufweisen, können die Bauteile der technischen Keramik, insbesondere Hochspannungsisolatoren und Rohre, eine Länge bis etwa 6 Meter oder ein Gewicht von mehr als 1000 kg besitzen. Proportional zu ihrer Länge, ihrer Kompaktheit und ihrem Gewicht können bei Formgebung, Trocknung und Brand erhebliche Spannungen im Formkörper und im Sinterkörper auftreten. Diese Spannungen können im Rahmen der Herstellung von Hochspannungsisolatoren beim Trocknen von Isolatorkörpern zum Abwerfen der Schirme und beim hängenden Brennen zum Bruch des Strunkes führen. Hochspannungsisolatoren sind bei ihrem Einsatz nicht nur erheblichen elektrischen, sondern auch mechanischen Beanspruchungen ausgesetzt. Daher kommt auch den mechanischen Eigenschaften der Hochspannungsisolatoren eine entscheidende Rolle zu. Bei Rohren großer Länge wird der Formstabilität des Sinterkörpers im Einsatz Bedeutung beigemessen.

Die Herstellung von Hochspannungsisolatoren umfaßt das Aufbereiten einer plastischen Korundporzellanmasse, das Extrudieren eines zylindrischen Formkörpers mit einer Vakuumstrangpresse, das Abdrehen, das Trocknen und das Brennen. Das Extrudieren bedingt Texturen in den Rohlingen. Mit Textur wird die anisotrope Ausrichtung der plättchenförmigen Tonsubstanz und der übrigen Massebestandteile bezeichnet, die unter dem Einfluß von Preßdruck, Fließbewegung und Scherung entsteht.

Es kann unter Fließtextur, Schneckentextur und Schnittextur unterschieden werden. Insbesondere die Schnittextur, die durch die Schneckenflügel einer Strangpresse erzeugt wird, ist für die Isolatorenherstellung kritisch. Es bildet sich eine dünne Zone ausgeprägter Textur, die sich schraubenförmig durch den Formkörper zieht. Diese sich oft über eine große Fläche erstreckende Zone ist eine Schwächezone, die das Abreißen des hängend gebrannten Formkörpers während des Brandes verursachen kann. Die Fließtextur bedingt eine anisotrope Trockenschwindung in dem Formkörper. Da die anisometrisch geformten Rohstoffpartikel außen und innen im Formkörper unterschiedlich ausgerichtet sind, wirkt sich dies in Form einer unterschiedlichen Trockenschwindung aus. Es entstehen beim Trocknen Spannungen, die in extremen Fällen bei der Trocknung von Hochspannungsisolatoren zum Abwurf von Schirmen vom Strunk des Formkörpers führen können.

Zur Vermeidung zu starker Texturen sollte eine Korundporzellanmasse, die für Hochspannungsisolatoren geeignet ist, einen Anteil relativ grober Partikel enthalten. Üblicherweise werden bis zu 5 Gew.- % der Rohstoffe als Grobpartikel mit einer Partikelverteilung zwischen etwa 45 und 100 µm zugegeben, die aus Quarz-, Feldspat- und/oder Tonerdeagglomeraten zusammengesetzt sind. Handelsübliche calcinierte Tonerden besitzen zwar eine wesentlich feinere Primärkorngröße, sind aber herstellungsbedingt agglomeriert. Die mittlere Partikelgröße der Korundporzellanmasse liegt dann üblicherweise in der Größenordnung von 8 µm.

Quarz hat als Bestandteil des gebrannten Porzellans sowohl festigkeitssteigernde, als auch festigkeits- und lebensdauermindernde Wirkung aufgrund der β-α-Quarz-Umwandlung bei 573°C in der Abkühlphase des Brandes, die mit der Volumenverkleinerung der Quarzkörner verbunden ist. Die Glasphase ist bei dieser Temperatur bereits erstarrt, so daß Gefügespannungen auftreten, die mit steigender Quarzkorngröße zunehmen. Tangentiale Druckspannungen wirken sich in der Umgebung eines Quarzkornes festigkeitssteigernd aus; diese Gefügeverspannung muß erst überwunden werden, bevor ein Riß weiterlaufen kann. Festigkeit und Lebensdauer werden beeinträchtigt, wenn die kompensierenden radialen Zugspannungen die Quarzfestigkeit überschreiten und Mikrorisse in den Quarzkörnern erzeugen. Mikrorisse in Quarzkörnern lassen sich bei lichtmikroskopischen Untersuchungen an Porzellanen häufig beobachten. Es ist bekannt, daß eine optimale Festigkeit mit Quarzkörnern in der Größenordnung von 10 bis 20 µm erreicht wird. In großtechnisch einsetzbaren Rohstoffen sind aber so breite Partikelverteilungen vorhanden, daß immer auch Anteile relativ großer, rißgefährdeter Quarzpartikel mit einer Partikelgröße bis etwa 80 µm vorhanden sind, wenn diese Rohstoffe nicht mit einem zusätzlichen Prozeßschritt auf Partikelgrößen von weniger als 20 µm für die gesamte Partikelverteilung gemahlen werden.

Beim Ersatz von Quarz durch Tonerde (synthetische Aluminiumoxid- oder/und Aluminiumhydroxidpulver) wird die Gefahr der Mikrorißbildung vermieden, da der im Brand erhalten gebliebene und/oder gebildete Korund (α-Al₂O₃) eine Wärmedehnung ähnlich der der übrigen Gefügebestandteile des Korundporzellans besitzt. Korund ist der Bestandteil im Korundporzellan, der die mit Abstand besten mechanischen Eigenschaften aufweist. Die festigkeitssteigernde Wirkung von Korund ist wesentlich von seinem Anteil und seiner Korngröße abhängig. Es ist allgemein bekannt, daß die beste Festigkeit erreicht wird bei Verarbeitung einer Tonerde, deren mittlere Partikelgröße nach dem Brennen im Korundporzellan bei 3 bis 9 µm liegt. Für ein Korundporzellan hoher Festigkeit sollte eine derart feine Tonerde zugegeben oder durch Mahlung während der Masseaufbereitung auf diese Partikelgrößen eingestellt werden; der Quarz sollte möglichst fein aufgemahlen oder gänzlich vermieden werden. Um Quarzpartikel > 20 µm mit Sicherheit auszuschließen, sollte die mittlere Partikelgröße des Quarzes 3 µm nicht überschreiten. Eine noch feinere Vermahlung ist vorteilhaft. Auch handelsübliche Feldspäte dürfen nicht als Grobfraktion zugeführt werden, da sie Quarz als Nebenbestandteil enthalten und die als Glasbildner wirkenden Feldspäte, ihre alternativ einsetzbaren Feldspatvertreter oder Gesteine, die Feldspäte oder/und Feldspatvertreter enthalten, homogen in der Masse verteilt sein müssen; diese Rohstoffe werden ebenso wie gemahlene Glasscherben und Glasfritten im folgenden Text als Glasbildner bezeichnet. Daher kann die optimale Festigkeit bei der herkömmlichen Porzellanherstellung nur erreicht werden, wenn die Ausgangsmaterialien nach vorhergehender Mahlung ausreichend fein zugegeben oder bei der Aufbereitung feingemahlen werden; die störende Textur und die Ausfälle infolge dieser Textur müssen dann in Kauf genommen werden. Verzichtet man auf diese Feinmahlung, dann ist zum Erreichen einer ausreichenden Festigkeit ein zusätzlicher hoher Anteil der teuren Tonerde zuzugeben.

Bei der großtechnischen Herstellung von Hochspannungsisolatoren ist ein wesentlicher Anteil der Ausfälle durch Texturen bedingt. Je nach Prozeßführung und Isolatorgeometrie liegen die texturbedingten Ausfälle bei etwa 1 bis 3 % der Bauteile. Auch bei der Herstellung andersartiger Bauteile aus Korundporzellan treten erhebliche Ausfälle aufgrund von Texturen auf. Sie wirken sich umso stärker aus, je stärker bei der Formgebung Scherkräfte auftreten und Texturen ausgebildet werden können und je länger, kompakter oder schwerer die Formkörper sind. Unter den verschiedensten Formgebungsverfahren in der Keramik sind diejenigen für die Ausbildung von Texturen am empfindlichsten, die Massen im plastischen Zustand verwenden. Hierzu gehört vor allem das Extrudieren.

Wie in den vorherigen Abschnitten dargelegt, muß nach dem derzeitigen Stand der Technik bei der Herstellung von großen Sinterkörpern aus herkömmlichen Porzellanmassen ein Kompromiß geschlossen werden zwischen dem gutem Verhalten bei der Herstellung, insbesondere der Verringerung von Texturen, und der hohen Festigkeit der gebrannten Sinterkörper. Die durch diesen Kompromiß verringerte Festigkeit wird gelegentlich durch eine zusätzliche hohe und kostspielige Tonerdezügabe ausgeglichen, hinterläßt aber dennoch einen merklichen Anteil an Texturfehlern, der nicht weiter ausgeglichen werden kann.

In der EP-B-0 189 260 wird ein Verfahren zur Herstellung eines hochfesten feldspatartigen Porzellans gelehrt, bei dem die unplastischen Rohstoffe vom Typ Quarz, Feldspat und Tonerde entsprechend Figur 1 eine mittlere Partikelgröße von etwa 2 bis 4 µm aufweisen, die unplastischen Rohstoffe calciniert und anschließend mit der Tonsubstanz gemischt werden. Da das Calcinieren ohne Tonsubstanz erfolgt, kann kein nennenswerter Anteil an Mullit gebildet werden. Es fehlen daher auch die Kristallkeime, die im Brand ein starkes Gerüst aus Nadelmullit entstehen lassen können und damit die Deformationsstabilität des Formkörpers im Brand erhöhen könnten. Das Calcinat wird vor oder nach Zugabe der Tonsubstanz auf eine ähnliche Partikelgröße gemahlen, wie sie die unplastischen Rohstoffe vor dem Calcinieren aufweisen. Die gemahlene und mit der Tonsubstanz versetzte Mischung wird durch Formen, Trocknen und Brennen weiterverarbeitet. Diese Schrift lehrt daher die wiederholte Mahlung der Ausgangsmaterialien auf eine außerordentlich geringe Partikelgröße und die wiederholte Durchführung des Brandes. Die feinkörnige Porzellanmasse führt zu einer geringeren Trocknungsempfindlichkeit. Aufgrund der Feinheit dieser Porzellanmasse wird erwartet, daß sie zu starker Texturbildung bei der Herstellung von Großkörpern neigt.

Das Derwent-Abstract zu SU-A-1544751 offenbart die Zugabe von Trachyt-Konzentrat und Quarzsand zu einer Massemischung, die 25 - 27 Gew.-% von Tonerde und 5 - 6 Gew.-% von gebrochenem Porzellan enthält und zur Herstellung von Porzellanisolatoren verwendet werden soll.

Dieser Veröffentlichung ist nicht zu entnehmen, daß die zerkleinerten Porzellanscherben in jeder möglichen Mischung mit den Rohstoffen, denen sie zugemischt werden, einen wesentlich höheren Anteil mit größeren Partikeln aufweisen, als die Partikel der Rohstoffe.

Die EP-A-0 281 420 beschreibt ein hochfestes Porzellan zur Verwendung für Isolatoren, bei dem die größten Quarzkörner nicht größer als 40 µm sind. Als Rohstoffe der Massemischung zur Herstellung des Porzellans werden Tonerde, Feldspat, SiO₂-Sand und Tonsubstanz, jedoch keine zerkleinerten Porzellanscherben aufgeführt.

Der Erfindung liegt die Aufgabe zugrunde, ein Verfahren zur Aufbereitung einer Korundporzellanmasse anzugeben, bei dem Textureffekte so gering gehalten werden, daß bei der Herstellung von Sinterkörpern keine Ausfälle aufgrund der Textur auftreten, und daß keine zusätzlichen Verfahrensschritte bei der Herstellung eines hochfesten Korundporzellans bedingt. Darüber hinaus liegt der Erfindung die Aufgabe zugrunde, möglichst Kostengünstige Ausgangsmaterialien bei der Herstellung der Korundporzellanmasse einzusetzen.

Gelöst wird diese Aufgabe durch eine sehr einfach und kostengünstig herstellbare Korundporzellanmasse, die insbesondere für die Massenfertigung von Hochspannungsisolatoren geeignet ist. Die Korundporzellanmasse enthält nach der Erfindung 60 bis 94 Gew.-% einer Komponente A und 6 bis 40 Gew.-% einer Komponente B, jeweils auf das Gesamtgewicht aller anorganischen Ausgangsmaterialien im trockenen Zustand bezogen. Sie ist dadurch gekennzeichnet, daß Komponente A 0 bis 70 Gew.-% Tonerde, 20 bis 70 Gew.-% Tonsubstanz, 10 bis 50 Gew.-% Glasbildner und 0 bis 30 Gew.-% Quarz enthält, jeweils auf das Gesamtgewicht der anorganischen Ausgangsmaterialien der Komponente A im trockenen Zustand bezogen, und Komponente B aus zerkleinerten Porzellanscherben besteht, daß die chemische Analyse der Mischung aus den Komponenten A und B 20 bis 75 Gew.-% SiO₂, 15 bis 80 Gew.-% Al₂O₃ und 2 bis 10 Gew.-% Flußmittel aus der Gruppe K₂O, Na₂O, FeO, MgO, CaO, Li₂O, BaO, SrO, ZnO, Fluorid enthält, daß die zerkleinerten Porzellanscherben eine mittlere Partikelgröße zwischen 25 und 800 µm besitzen und daß die Komponente A als Mischung vor dem Brand eine Partikelverteilung von 80 bis 100 Gew.-% kleiner 50 µm. insbesondere von 97 bis 100 Gew.-% kleiner 45 µm, aufweist.

Als Tonerde wird ein ungemahlener oder gemahlener Rohstoff auf Basis Aluminiumoxid, Übergangstonerden oder/und Aluminiumhydroxid verstanden, der bei gewichtsbezogenen Angaben allein als Al₂O₃ berücksichtigt wird. Die gebrannte Tonerde wird hier als Korund bezeichnet. Um dem Begriff Korundporzellan auch von den zugegebenen Rohstoffen gerecht zu werden, empfiehlt sich eine Zugabemenge von mindestens 1 % Tonerde. Der Begriff Tonsubstanz kennzeichnet plastische Rohstoffe auf Basis Ton oder/und Kaolin, die - wie handelsüblich - geringfügig mit anderen Mineralien und Verunreinigungen versetzt sein können. Als Glasbildner werden die Rohstoffe auf Basis Feldspat, Feldspatvertreter oder/und Gestein mit hohem Gehalt an Feldspat oder/und Feldspatvertreter oder/und gemahlener Glasscherben oder/und Glasfritten bezeichnet. Sie wirken als Flußmittel und tragen wesentlich zur Ausbildung einer Glasphase während des Brandes bei. Mit Quarz werden amorphe und kristalline Rohstoffe auf Basis SiO₂ benannt. Auch die Glasbildner und Quarz können geringe Gehalte an anderen Mineralien und Verunreinigungen enthalten. Quarz, Glasbildner und/oder Tonsubstanz können auch in Form natürlich vorkommender Mineralgemische und Gesteine zugegeben werden.

Die Partikelgröße und die Partikelverteilung der gröberen Zusätze wurde oberhalb etwa 45 µm mittels Siebungen bestimmt, während für Messungen unterhalb 45 µm das Lasergranulometer Cilas 920 verwendet wurde.

Die zerkleinerten Porzellanscherben weisen bei der Zugabe zur Korundporzellanmasse bereits ein Porzellangefüge auf, das neben der Glasphase Mullit und gegebenenfalls Korund oder/und Quarz enthält. Die Anteile an zerkleinerten Porzellanscherben lassen sich nach dem Brand im Gefüge nicht mehr wahrnehmen. Vorzugsweise werden zerkleinerte Porzellanscherben zugesetzt, die der Korundporzellanherstellung entstammen. Bei der Herstellung von Hochspannungsisolatoren sind dies bevorzugt die Abfälle aus der Hochspannungsisolatorenfertigung. Das können die zerkleinerten Abschnitte der Endbereiche der Isolatorenkörper, die vor dem Aufkitten der Metallkappen abgetrennt werden, und beschädigte oder/und fehlerhafte Isolatoren sein. Auch Rohre und andere Produkte der Technischen Keramik bestehen häufig aus Korundporzellan, dessen Abfälle bevorzugt für das erfindungsgemäße Aufbereitungsverfahren verwendet werden können.

Gebrannte Abfälle von herkömmlich gefertigten Isolatoren enthalten im Gefüge häufig Quarzkörner bis 50 µm und Korundagglomerate bis 70 µm Größe. Da die Quarzkörner meistens durch Mikrorisse vorgeschädigt sind und die Korundagglomerate porös und inhomogen aufgebaut sind, werden diese bei der Zerkleinerung, Aufbereitung sowie im Brand in ihrer Größe stark reduziert, da sie mit Schwachstellen behaftet sind. Die übergroßen Quarzkörner und Korundagglomerate aus dem zerkleinerten Porzellan erreichen in dem erfindungsgemäßen Korundporzellan Größen, die 20 µm sehr selten oder nie überschreiten, auch wenn die Größe der zerkleinerten Porzellanscherben 100 µm oder sogar 500 µm übertrifft.

Die Erfindung beruht demnach auf dem Gedanken, die sich bei der Formgebung ausbildende Textur durch einen Grobpartikelanteil in der Korundporzellanmasse zu brechen, der beim Brennen keine Quarz- und Korundkörner hinterläßt, die die Festigkeit und Lebensdauer der Sinterkörper aus Korundporzellan aufgrund der Korngröße oder Kornanrisse beeinträchtigen.

Von den Rohstoffen der Komponente A weist Tonderde bevorzugt eine Partikelverteilung von 50 bis 100 Vol.-% bei 2 bis 10 µm auf, Quarz von 50 bis 100 Vol.-% s 10 µm und Glasbildner von 50 bis 100 Vol.-% s 10 µm. Die Komponente B wird in einer Partikelgröße ≤ 2000 µm zugegeben. Ihre Zugabe zu der Mischung erfolgt bevorzugt in einer Partikelverteilung von 70 bis 95 Gew.-% bei 30 bis 400 µm, insbesondere in einer Partikelverteilung von 70 bis 95 Gew.-% bei 30 bis 150 µm. Bevorzugt ist die mittlere Partikelgröße der Komponente B zweimal bis zehnmal so groß wie die mittlere Partikelgröße der Komponente A. Bevorzugt enthält die Korundporzellanmasse 12 bis 36 Gew.-% der Komponente B, insbesondere 18 bis 32 Gew.-%.

Des weiteren wird die Aufgabe durch ein Verfahren zur Aufbereitung von Korundporzellanmassen gelöst, das dadurch gekennzeichnet ist, daß die Ausgangsmaterialien der Komponente A zusammengemischt und die Mischung gegebenenfalls auch gemahlen wird, wobei die Mischung eine Partikelverteilung von 97 bis 100 Gew.-% kleiner als 45 µm aufweist, und daß danach die Komponente B zur Komponente A gemischt wird.

Ein weiteres Verfahren zur Aufbereitung von Korundporzellanmassen ist dadurch gekennzeichnet, daß eine Mischung aus den anorganischen Ausgangsmaterialien der Komponente A erzeugt wird, in der ein Teil der anorganischen Ausgangsmaterialien, insbesondere eine Teilmenge oder die gesamte Menge an Tonsubstanz, nicht zugegeben ist, daß diese Mischung homogenisiert und gegebenenfalls auch gemahlen wird und daß anschließend dieser Mischung die fehlenden Teile der anorganischen Ausgangsmaterialien und die Komponente B zugegeben werden. In einer bevorzugten Variante dieses Verfahrens werden die der Mischung fehlenden Teile der anorganischen Ausgangsmaterialien mit der Komponente B zusammengegeben, homogenisiert und gegebenenfalls auch gemahlen, bevor diese zweite Mischung der Mischung aus den übrigen anorganischen Ausgangsmaterialien der Komponente A zugegeben wird. Eine besonders vorteilhafte Verfahrensvariante ist dadurch gekennzeichnet, daß die der Mischung fehlendeTeilmenge an Tonsubstanz ≥ 50 Gew.%, insbesondere ≥ 80 Gew.-% der gesamten Zugabemenge an Tonsubstanz ist.

Insbesondere wird die Gesamtmischung aus den Komponenten A und B homogenisiert und gegebenenfalls auch gemahlen. Die Homogenisierung einer Mischung oder der Gesamtmischung aus den Komponenten A und B kann in einem Mischaggregat, aber bevorzugt durch eine Mahlung erfolgen. Bei diesen Verfahrensvarianten wird die Gesamtmischung insbesondere auf eine Partikelverteilung von 80 bis 98 Gew.-% kleiner als 45 µm gemahlen.

Die verschiedenen Techniken der Zerkleinerung und der Aufbereitung im Rahmen der Porzellanherstellung sowie die hierbei spezifisch einzusetzenden Rohstoffqualitäten sind dem Fachmann geläufig. Es ist jedes Aufbereitungsverfahren geeignet, das gewährleistet, daß entweder schon die aufbereitete Korundporzellanmasse oder der aus einer Korundporzellanmasse gebrannte Körper frei von Quarzkörnern > 20 µm ist.
Naßaufbereitungsverfahren, bei denen Wasser in einer Größenordnung von 50 Gew.-% vor der in einer Filterpresse erfolgenden Entwässerung in der Masse enthalten sind, sind wegen der guten Homogenisierung zu bevorzugen. Die einzelnen Zusätze können einzeln, in Gruppen oder in der gesamten Mischung homogenisiert oder/und gemahlen werden. Die Tonsubstanz kann zu jeder Aufbereitungsstufe hinzugegeben werden; für die Verwendung einer Naßmahlung ist es vorteilhaft, höchstens 20 Gew.-% der insgesamt zuzugebenden Tonsubstanz zu den unplastischen Rohstoffen beizumischen, um eine intensivere Mahlwirkung zu erreichen. Es kann genügen, die Komponenten A und B allein durch einen Mischvorgang zu homogenisieren, z.B. in einem Quirl; es ist in vielen Fällen günstiger, diese Mischung auch zu mahlen. Wenn eine stärkere Homogenisierung der Komponenten A und B erreicht werden soll, empfiehlt es sich, die Komponente B im wesentlichen in einer Partikelgröße > 30 µm zuzugeben und eine stärkere Vermahlung vorzunehmen, z.B. auf eine Partikelverteilung von 80 bis 98 Gew.-% kleiner als 45 µm.

Über die zerkleinerten Porzellanscherben wird der Korundporzellanmasse Mullit zugeführt. Dieser Mullit hat die Wirkung von Kristallisationskeimen, so daß die Kristallisation von Mullit aus der Glasphase früher und intensiver einsetzt. Es wird daher mehr Nadelmullit als im herkömmlichen Porzellan gebildet, so daß die Viskosität der Schmelzphase aufgrund der Fixierung z. B. über die Mullit-Kristallgeflechte erhöht erscheint und die Deformationsstabilität im Brand verbessert wird. Aufgrund der Zugabe von zerkleinerten Porzellanscherben ist eine Feinstmahlung der Rohstoffe für die Herstellung eines besonders Mullitreichen Korundporzellans nicht erforderlich. Die Feinstmahlung würde bei einem herkömmlichen Aufbereitungsverfahren die Reaktivität der Rohstoffe erhöhen und die Ausbildung von Mullit fördern, würde aber auch die Texturempfindlichkeit der Masse so sehr steigern, daß sie für die Isolatorenfertigung nicht anwendbar ist. Die feinstgemahlene Masse ist außerdem, besonders bei der Formgebung, schwierig zu verarbeiten.

Die Erhöhung des Mullitgehaltes konnte mit der Röntgenbeugung nachgewiesen werden. Mit der durch den Mullit scheinbar erhöhten Viskosität der Schmelzphase erhöht sich auch die Festigkeit der Formkörper während des Brandes. Dadurch wird es ermöglicht, größere und schwerere Isolatoren, aber auch solche mit kleineren Durchmessern und größerer Länge zu produzieren. Für den Fall, daß die Isolatorkörper stehend gebrannt werden, wird durch die bessere Formstabilität Brennraum in den Öfen gewonnen, weil die zur Aufhängung dienenden Teile entfallen oder zumindest verkleinert werden können.

Die übergroßen Quarzpartikel der zerkleinerten Porzellanscherben verringern auch bei der mechanischen Beanspruchung während der Aufbereitung ihre Größe, da die Mikrorisse in großen Quarzkörnern als Sollbruchstellen zerkleinernd wirken. Die Quarzkörner werden beim Brand teilweise in der Schmelzphase gelöst. Die Festigkeit und Lebensdauer der hieraus hergestellten Sinterkörper wird nicht beeinträchtigt.

Bei der Herstellung der erfindungsgemäßen Korundporzellanmasse werden nicht nur ein wiederholter Brand und eine wiederholte Mahlung vermieden, sondern es wird außerdem ein Teil der kostenintensiven Rohstoffe, insbesondere Tonerde, durch Zusatz zerkleinerter Porzellanscherben eingespart. Darüberhinaus wird eine höhere Festigkeit des erfindungsgemäßen Korundporzellans erzielt, ohne zusätzlich höhere Tonerdeanteile zugeben zu müssen, da die in den zerkleinerten Porzellanscherben enthaltenen Korundpartikel voll festigkeitssteigernd wirken. Überraschend wurde gefunden, daß ein erfindungsgemäßer Sinterkörper aus Korundporzellan, der durch Formen, Trocknen, Brennen und gegebenenfalls weitere Verfahrensschritte aus einer zerkleinerte Porzellanscherben enthaltenden Korundporzellanmasse hergestellt ist, eine Biegefestigkeit aufweist, die um mindestens 25 MPa höher ist als die Biegefestigkeit eines Sinterkörpers aus Korundporzellan, der ohne Zugabe von zerkleinerten Porzellanscherben, aber mit im wesentlichen gleicher chemischer Zusammensetzung und mit gleichem oder höherem Korundgehalt im Korundporzellan hergestellt ist. Die Deformation von Formkörpern im Brand unter ihrem Eigengewicht wird wesentlich verringert; dies eröffnet zusätzlich die Möglichkeit, noch größere oder längere Isolatoren mit größerer Flächenbelastung herzustellen und hängend zu brennen. Überraschenderweise trat durch den Zusatz von zerkleinerten Porzellanscherben mit übergroßen Quarz- und Korundpartikeln eine starke Zerkleinerung und Auflösung dieser Partikel im Brand auf, so daß diese Partikel die Festigkeit und Lebensdauer der daraus hergestellten Sinterkörper nicht beeinträchtigen.

Die erfindungsgemäße Korundporzellanmasse kann u.a. für die Herstellung von Isolatoren, Rohren, Stäben, Katalysatorträgern, Laborporzellan, Sanitärporzellan und Tafelporzellan vorteilhaft eingesetzt werden und eignet sich insbesondere für Hochspannungsisolatoren.

### Beispiele:

Im folgenden wird die Erfindung mit den erfindungsgemäßen Beispielen charakterisiert und den Vergleichsbeispielen gegenübergestellt.

Bei allen Vergleichsbeispielen und erfindungsgemäßen Beispielen wurde die Korundporzellanmasse durch Mahlung in einer Kugelmühle mit einem Wassergehalt in der Größenordnung von 50 Gew.-% und anschließendem Abpressen auf eine Größenordnung von 20 Gew.-% in einer Filterpresse hergestellt. Die Formgebung der Probekörper in Form von Rundstäben erfolgte mit einer Vakuumstrangpresse Typ V 250 der Firma Netzsch und für die Herstellung von Hochspannungsisolatoren mit einer Vakuumstrangpresse entsprechender Dimension. Gebrannt wurde in einem Herdwagenofen mit einer Brennkurve, wie sie für Hochspannungsisolatoren herkömmlich angewendet wird. Die Brenntemperatur erreichte ca. 1320°C.

Die Biegefestigkeit wurde nach dem Brand an unglasierten und ungeschliffenen Rundstäben mit 12 mm Durchmesser und 100 mm Stützweite in einer 3-Punkt-Biegevorrichtung entsprechend IEC 672 geprüft. Die Rundstäbe wurden aus der jeweiligen Korundporzellanmasse durch Extrudieren auf den Durchmesser gebracht, so daß sich beim Trocknen und Brennen durch die Schwindung ein Durchmesser von 12 ± 0,1 mm einstellte. Messungen an 10 bis 12 Proben wurden jeweils gemittelt.

Für die Prüfung der Deformation im Brand wurden unglasierte Stäbe mit trapezförmigem Querschnitt von 23 mm x 21 mm x 14 mm Höhe und 250 mm Länge eingesetzt. Sie wurden mit einem gesonderten Mundstück extrudiert und im Brand auf zwei Schneiden aus feuerfestem Material im Abstand von 190 mm gelagert. Die Abweichung der Stabmitte von der Schneidenebene wurde gemessen. Eine geringe Durchbiegung gilt als Maß für eine hohe Deformationsstabilität beim Brand.

Für die Gefügebeurteilung des gebrannten Korundporzellans wurden Anschliffe angefertigt, die mit einem Auflichtmikroskop beurteilt wurden.

### Beispiel 1 (Vergleichsbeispiel):

Für das Vergleichsbeispiel 1 und das erfindungsgemäße Beispiel 2 wurden zwei Versätze so zusammengestellt, daß sich für die Korundporzellanmassen im wesentliche gleiche chemische Analysen, jedoch unterschiedliche mineralogische Zusammensetzungen ergaben. Die chemische Analyse betrug (Angaben in Gew.-%):

| | Vergleichsbeispiel 1 | Beispiel 2 |
|---|---|---|
| SiO₂ | 46,91 | 46,74 |
| Al₂O₃ | 42,29 | 42,30 |
| Fe₂O₃ | 0,55 | 0,66 |
| TiO₂ | 0,23 | 0,27 |
| CaO | 0,21 | 0,25 |
| MgO | 0,43 | 0,52 |
| BaO | 0,07 | 0,06 |
| K₂O | 4,24 | 4,18 |
| Na₂O | 0,39 | 0,40 |
| Glühverlust | 4,58 | 4,52 |

Der Versatz des Vergleichsbeispiels 1 entsprach einer herkömmlichen, auch für Hochspannungsisolatoren verwendeten Korundporzellanmasse und bestand aus 25 Gew.-% Tonerde, zugegeben als Aluminiumoxid, 8 Gew.-% Quarz, 40 Gew.-% Tonsubstanz und 27 Gew.-% Feldspat. Die Mischung aus diesen Rohstoffen wurde 2,5 Stunden in der Kugelmühle gemahlen, wobei eine Partikelverteilung eingestellt wurde, bei der 95 Gew.- % des Mahlgutes kleiner als 45 µm sind, gemessen durch Siebung. Die Biegefestigkeit des hieraus hergestellten Korundporzellans betrug 120 MPa. Das Gefüge des

Vergleichsbeispiels 1 ließ Quarzkörner bis 70 µm, Korundkörner in Agglomeraten bis 90 µm und Porengrößen bis 60 µm erkennen.

### Beispiel 2 (erfindungsgemäß):

Für die Komponente A wurden 17 Gew.-% Tonerde als Aluminiumoxid, 3 Gew.-% Quarz, 40 Gew.-% Tonsubstanz und 20 Gew.-% Feldspat gemischt und auf eine Partikelverteilung von 99,8 Gew.-% < 45 µm mit der Kugelmühle gemahlen. Danach wurden 20 Gew.-% zerkleinerte Porzellanscherben mit einer Partikelverteilung im wesentlichen zwischen 45 und 100 µm als Komponente B zugegeben und durch eine Vermahlung über 0,5 Stunden in der Kugelmühle homogenisiert. Hierbei ergab sich ebenfalls eine Partikelverteilung von 95 Gew.% < 45 µm. Die zerkleinerten Porzellanscherben wiesen einen Korundgehalt von 25 Gew.-% auf, so daß der Gehalt an Tonerde und Korund des Versatzes 22 Gew.-% betrug.

Beim erfindungsgemäßen Beispiel 2 wurde eine Biegefestigkeit von 155 MPa bestimmt; damit wurde eine um 35 MPa höhere Biegefestigkeit erzielt, obwohl der Korundgehalt der Sinterkörper um 3 Gew.-% niedriger lag als bei den Sinterkörpern des Vergleichsbeispiels 1.

Das Gefüge des erfindungsgemäßen Korundporzellans zeigte unter dem Auflichtmikroskop ein deutlich feineres und homogeneres Gefüge als beim Vergleichsbeispiel 1. Die Korundkörner erreichten zu 99,9 % weniger als 30 µm Größe, und von den Quarzkörnern erstreckten sich 99,9 % nicht über 2 µm. Die Porengröße wurde zu 99,9 % ≤ 35 µm bestimmt.

Röntgenbeugungsaufnahmen mit einem Diffraktometer wiesen bei Beispiel 2 im Korundporzellan einen 1,6fach höheren Mullitgehalt aus als im Vergleichsbeispiel 1. Quarz war im Korundporzellan des Beispiels 2 nicht nachweisbar, während das Korundporzellan des Vergleichsbeispiels 1 einen sehr deutlichen Quarz-Peak ergab.

### Vergleichsbeispiel 3 und erfindungsgemäße Beispiele 4 bis 7:

Bei den Beispielen 3 bis 7 wurde die Zugabemenge der zerkleinerten Porzellanscherben variiert, aber der Gehalt an Tonerde und an Korund aus den zerkleinerten Porzellanscherben in der Summe mit 20 Gew.-% Al₂O₃ in der Korundporzellanmasse konstant gehalten. Als Komponente A wurde eine Mischung aus Tonerde, Feldspat, Quarz, Kaolin und Ton verwendet. In Tabelle 1 werden die Zugabemengen an anorganischen Ausgangsmaterialien der Komponente A und die Zugabemenge der Komponente B dargestellt. Die Summe der einzelnen Zugabemengen ergibt jeweils 100 Gew.-% bezogen auf das Gesamtgewicht aller anorganischen Ausgangsmaterialien im trockenen Zustand. In Tabelle 2 werden die Zugabemengen an Tonerde und Korund zur Korundporzellanmasse aufgeführt. Die Aufbereitung von Vergleichsbeispiel 3 erfolgte wie in Vergleichsbeispiel 1. Die Mischung des Vergleichsbeispiels 3 wurde auf eine Partikelverteilung von 95,5 Gew.-% < 45 µm gemahlen. Die zerkleinerten Porzellanscherben wiesen folgende Zusammensetzung auf: SiO₂ 49,2 Gew.-%, Al₂O₃ 44,5 Gew.-%, Fe₂O₃ 0,5 Gew.-%, TiO₂ 0,2 Gew.-%, CaO 0,2 Gew.-%, MgO 0,5 Gew.-%, K₂O 4,5 Gew.-%, Na₂O 0,4 Gew.-%. Die Aufbereitung der erfindungsgemäßen Beispiele 4 bis 7 erfolgte wie bei dem erfindungsgemäßen Beispiel 2. Hierbei wurde die Komponente A auf Partikelverteilungen von 99,6 bis 100 Gew.-% < 45 µm gemahlen. Die Partikelverteilungen der zerkleinerten Porzellanscherben lagen im wesentlichen zwischen 45 und 100 µm. Die Vermahlungen der Gesamtmischungen ergaben Partikelverteilungen von 95 bis 96 Gew.-% < 45 µm. Die Ergebnisse der Biegefestigkeits- und Durchbiegungsprüfung zu dem hieraus hergestellten Korundporzellan werden ebenfalls in Tabelle 2 wiedergegeben.

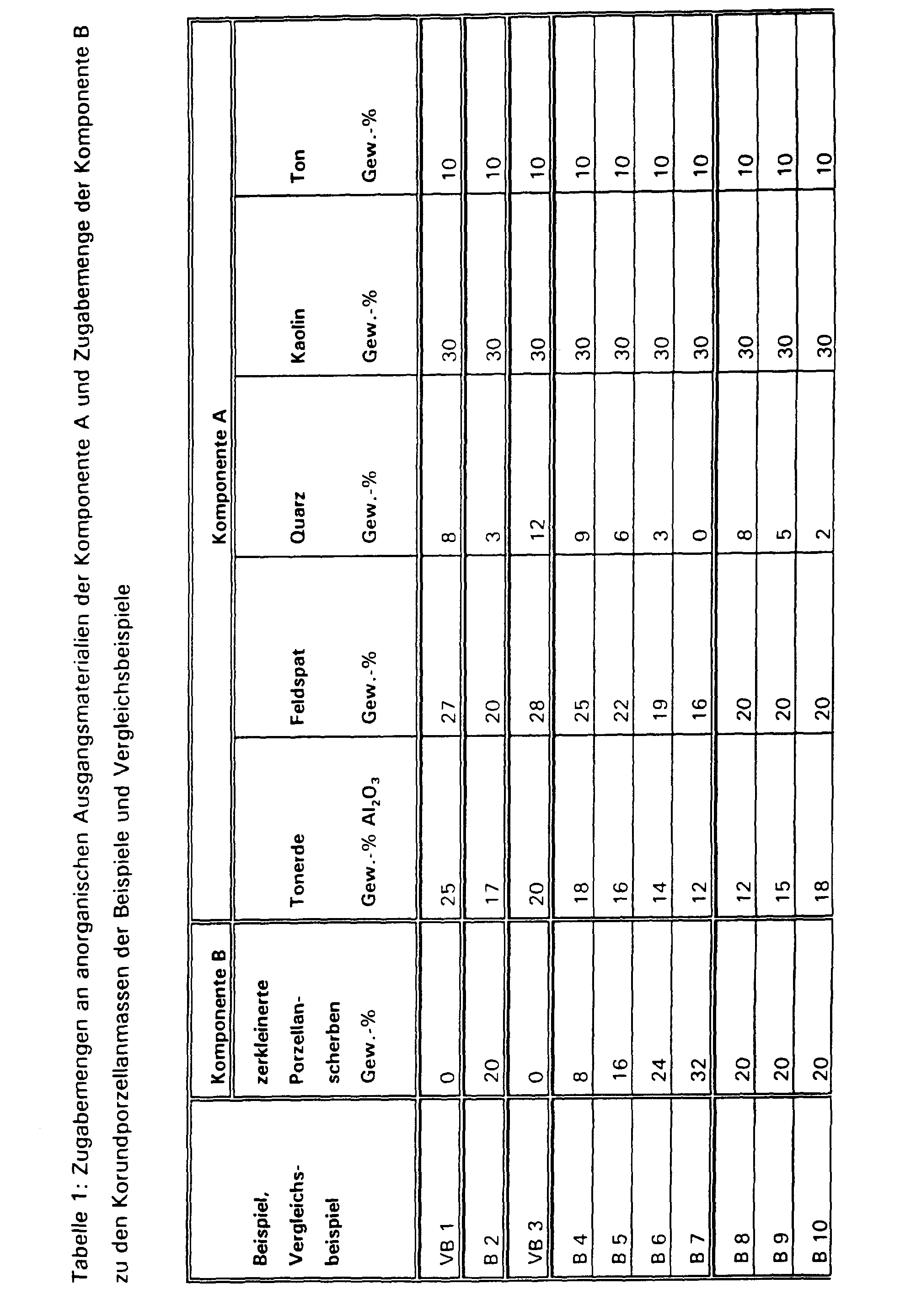

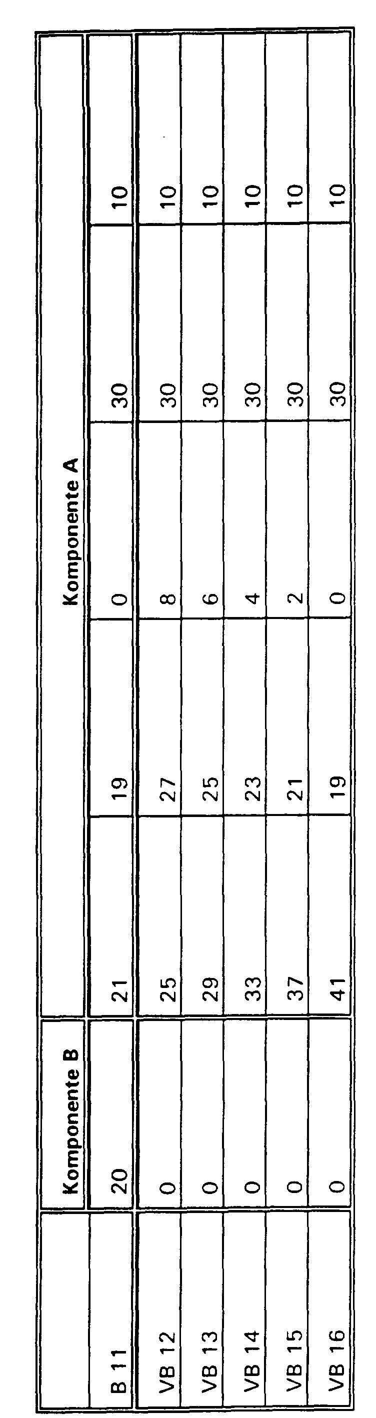

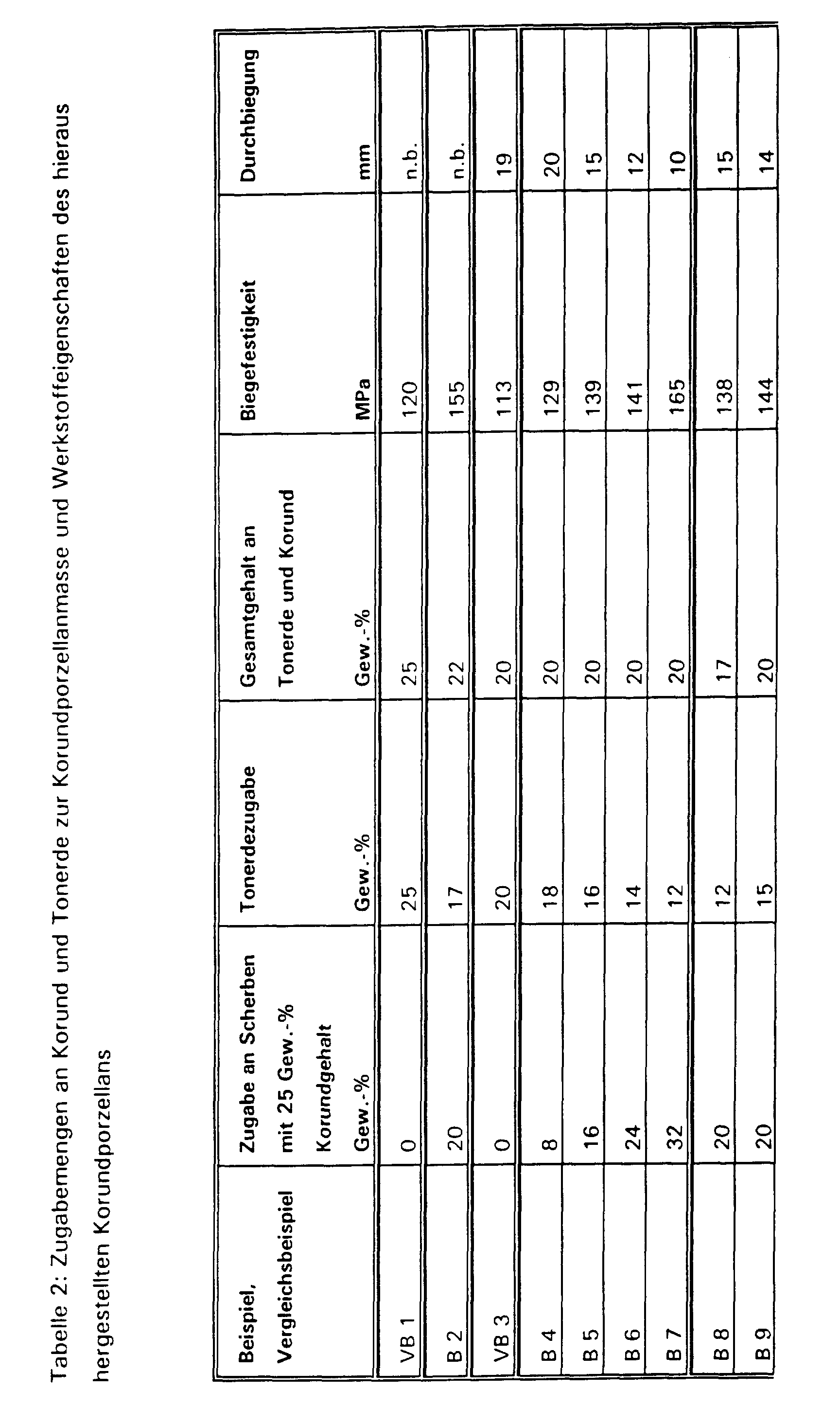

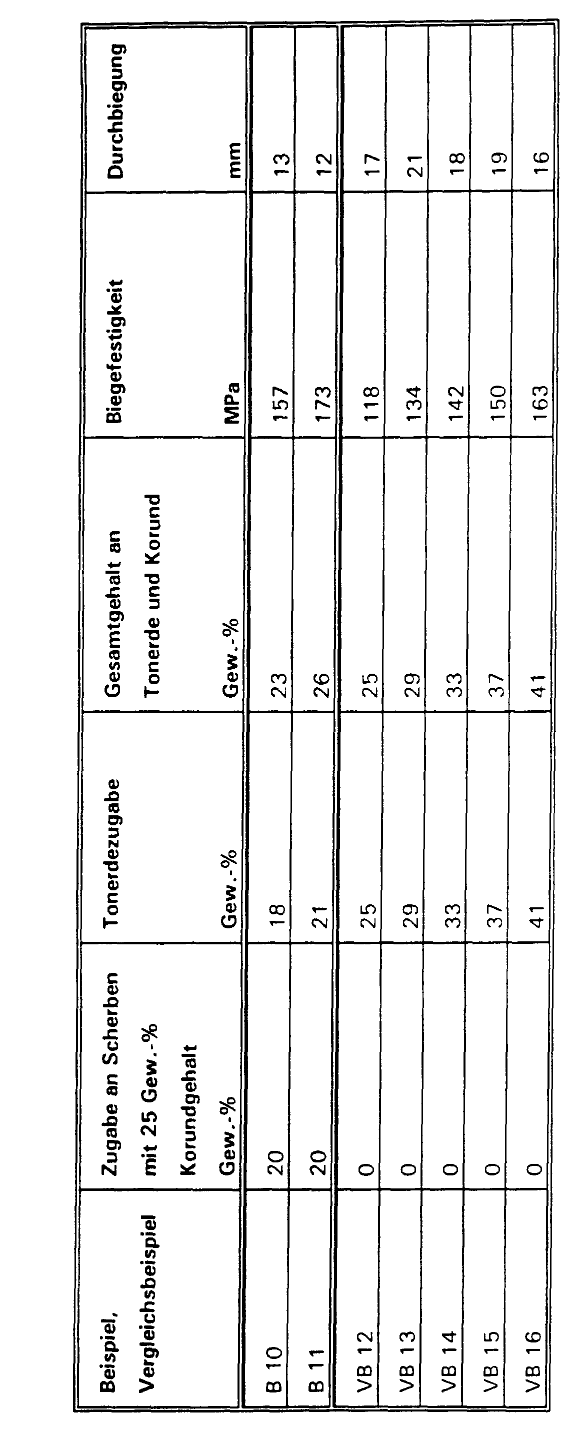

Die Prüfungsergebnisse an den Proben der Beispiele 3 bis 7 verdeutlichen den starken Anstieg der Biegefestigkeit sowie der Deformationsstabilität im Brand mit wachsender Zugabemenge an zerkleinerten Porzellanscherben, obwohl der Gehalt an Tonerde in Form von Aluminiumoxid und an Korund in den Gesamtmischungen mit 20 Gew.-% konstant gehalten wurde.

### Erfindungsgemäße Beispiele 8 bis 11 und Vergleichsbeispiele 12 bis 16:

Bei den erfindungsgemäßen Beispielen 8 bis 11 wurde der Gehalt an Tonerde und Korund in der Korundporzellanmasse variiert, wobei die Zugabemenge an zerkleinerten Porzellanscherben mit 20 Gew.-% unverändert gelassen wurde. Es wurde von einer Komponente A mit 30 Gew.-% Kaolin, 10 Gew.-% Ton und variierten Gehalten an Tonerde, Feldspat und Quarz ausgegangen (Tabelle 1). Die Aufbereitung erfolgte wie in Beispiel 2. Die Komponente A wurde auf Partikelverteilungen von 99,6 bis 100 Gew.-% < 45 µm gemahlen. Die Partikelverteilungen der Komponente B lagen im wesentlichen zwischen 45 und 100 µm. Die Gesamtmischungen wurden in einer Kugelmühle auf Partikelverteilungen von 95 bis 96 Gew.-% < 45 µm aufgemahlen und dabei gründlich homogenisiert. Die Gehalte an Tonerde und Korund sowie die Prüfungsergebnisse werden in Tabelle 2 aufgeführt. Die zerkleinerten Porzellanscherben wiesen die gleiche Zusammensetzung wie in den Beispielen 4 bis 7 auf. Das erfindungsgemäße Beispiel 8 wurde in einem größeren Versuchsmaßstab gefertigt; hierbei traten weder Verarbeitungsschwierigkeiten, noch Texturausfälle auf.

Die Aufbereitung der Korundporzellanmassen der Vergleichsbeispiele 12 bis 16 erfolgte entsprechend der eines herkömmlichen Korundporzellans. Die anorganischen Ausgangsmaterialien wurden einschließlich des Tons, aber mit Ausnahme des Kaolins in einer Kugelmühle gemahlen. Der gesamte Gehalt an Kaolin wurde in einem Quirl der in der Kugelmühle gemahlenen Mischung zugegeben. Hierbei wurden Partikelverteilungen von 95 bis 96 Gew.-% < 45 µm eingestellt. Diesen Gesamtmischungen wurde anschließend in einer Filterpresse der überwiegende Teil des Wassers entzogen. Zum Erreichen einer Biegefestigkeit wie bei den erfindungsgemäßen Beispielen 8 bis 11 sind wesentlich höhere Gehalte an in Form von Tonerde zugegebenem Al₂O₃ erforderlich (Tabelle 2). Die Biegefestigkeit der Vergleichsbeispiele 12 bis 16 liegt - bezogen auf den jeweiligen Korundgehalt des Korundporzellans - in einem deutlich unterschiedenen Festigkeitsniveau, das sich bei vergleichbarer Zusammensetzung sogar mindestens 35 MPa unterhalb der vergleichbaren Werte der erfindungsgemäßen Beispiele 8 bis 11 befindet. Die Durchbiegung ist etwa um ein Drittel gegenüber den erfindungsgemäßen Beispielen 8 bis 11 höher und damit schlechter.

## Patentansprüche

1. Korundporzellanmasse, deren anorganische Ausgangsmaterialien aus keramischen Rohstoffen, als Komponente A bezeichnet, und aus zerkleinerten Scherben von Porzellan, als Komponente B bezeichnet, zusammengesetzt sind, dadurch gekennzeichnet, daß die Komponente A 60 bis 92 Gew.-% und die Komponente B 8 bis 40 Gew.-% beträgt, jeweils auf das Gesamtgewicht aller anorganischen Ausgangsmaterialien im trockenen Zustand bezogen, wobei die Komponente A als Rohstoffe 8 bis 70 Gew.-% Tonerde, 20 bis 70 % Tonsubstanz, 10 bis 50 Gew.-% Glasbildner und 0 bis 30 Gew.-% Quarz enthält, jeweils auf das Gesamtgewicht der anorganischen Ausgangsmaterialien der Komponente A im trockenen Zustand bezogen, daß die chemische Analyse der Mischung aus den Komponenten A und B 20 bis 75 Gew.-% SiO₂, 15 bis 80 Gew.-% Al₂O₃ und 2 bis 10 Gew.-% Flußmittel aus der Gruppe K₂O, Na₂O, FeO, MgO, CaO, Li₂O, BaO, SrO, ZnO, Fluorid enthält und daß die Mischung der Komponente A vor dem Brand eine Partikelverteilung von 80 bis 100 Gew.-% kleiner 50 µm, insbesondere eine Partikelverteilung von 97 bis 100 Gew.-% kleiner 45 µm, aufweist, und daß die Komponente B eine mittlere Partikelgröße zwischen 25 und 800 µm aufweist.

2. Verfahren zur Herstellung einer Korundporzellanmasse nach Anspruch 1, dadurch gekennzeichnet, daß die Rohstoffe der Komponente A in einer der möglichen Zusammensetzungen gemischt und gemeinsam gemahlen werden, bis daß die Partikelgröße der Komponente A einen Anteil von 80 bis 100 Gew.-% kleiner 50 µm, insbesondere einen Anteil von 97 bis 100 Gew.-% kleiner 45 µm, aufweist, daß danach die Komponente B mit einer mittleren Partikelgröße zwischen 25 und 800 µm, vorzugsweise zwischen 25 und 200 µm, der Komponente A zugegeben wird und daß dann die Komponente A und die Komponente B miteinander gemischt und homogenisiert werden.

3. Verfahren zur Herstellung einer Korundporzellanmasse nach Anspruch 1, dadurch gekennzeichnet, daß die Rohstoffe der Komponente A in einer der möglichen Zusammensetzungen gemischt und auf eine Partikelgröße gemahlen werden, daß 97 bis 100 Gew.-% der Partikel kleiner als 45 µm sind, daß die Komponente B in einer Partikelgröße bis zu 2000 µm der Komponente A zugemischt wird und daß dann eine gemeinsame Vermahlung der beiden Komponenten auf eine Partikelgröße erfolgt, bis daß 80 bis 98 Gew.-% der Mischung kleiner einer Partikelgröße von 45 µm sind.

4. Verfahren zur Herstellung einer Korundporzellanmasse nach einem Ansprüche 1 bis 3, dadurch gekennzeichnet, daß die Rohstoffe der Komponente A folgende Kornverteilung aufweisen: Tonerde: 50 bis 100 Vol.-% von 2 bis 10 µm, Quarz: 50 bis 100 Vol.-% ≤ 10 µm, Glasbildner: 50 bis 100 Vol.-% ≤ 10 µm.

5. Verfahren zur Herstellung einer Korundporzellanmasse nach Anspruch 1, dadurch gekennzeichnet, daß die Komponente A und die Komponente B in einem der möglichen Gewichtsverhältnisse miteinander gemischt werden, daß die mittlere Partikelgröße der Komponente B 2 bis 10 mal so groß ist wie die mittlere Partikelgröße der Komponente A und daß beide Komponenten gemeinsam gemahlen werden, bis daß 80 bis 98 Gew.-% der Mischung der beiden Komponenten eine Partikelgröße aufweisen, die unter 45 µm liegt.

6. Verfahren zur Herstellung einer Korundporzellanmasse nach Anspruch 5, dadurch gekennzeichnet, daß die Partikelgröße der Komponente B bei der Zugabe vor der Mahlung ≤ 2000 µm beträgt.

7. Verfahren zur Herstellung einer Korundporzellanmasse nach einem der Ansprüche 1 bis 6, dadurch gekennzeichnet, daß die Tonsubstanz der Komponente A vollständig oder in einer Teilmenge gemeinsam mit der Komponente B den übrigen Rohstoffen der Komponente A zugemischt oder erst nach der Zugabe der Komponente B zu den Rohstoffen der Komponente A zugemischt wird.

8. Verfahren zur Herstellung einer Korundporzellanmasse nach einem der Ansprüche 1 bis 7, dadurch gekennzeichnet, daß die Scherben der Komponente B aus Korundporzellan bestehen.

9. Verwendung der Korundporzellanmasse nach Anspruch 1 zur Herstellung von Sinterkörpern, vorzugsweise von Isolatoren, insbesondere Hochspannungsisolatoren.

## Claims

1. Corundum porcelain material, the inorganic starting materials of which are composed of ceramic raw materials, denoted as component A, and of broken fragments of porcelain, denoted as component B, characterized in that component A amounts to 60 to 92% by weight and component B amounts to 8 to 40% by weight, in each case related to the total weight of all inorganic starting materials in the dry state, with component A containing as raw materials 8 to 70% by weight aluminium oxide, 20 to 70% clay substance, 10 to 50% by weight vitrifiers and 0 to 30% by weight quartz, in each case related to the total weight of the inorganic starting materials of component A in the dry state, in that the chemical analysis of the mixture of components A and B contains 20 to 75% by weight SiO₂, 15 to 80% by weight Al₂O₃ and 2 to 10% by weight fluxing agent from the group K₂O, Na₂O, FeO, MgO, CaO, Li₂O, BaO, SrO, ZnO, fluoride, and in that the mixture of component A has, before the firing a particle distribution of 80 to 100% by weight smaller than 50 µm, in particular a particle distribution of 97 to 100% by weight smaller than 45 µm, and in that component B has an average particle sizesbetween 25 and 800 µm.

2. Method for the manufacture of a corundum porcelain body according to claim 1, characterized in that the raw materials of component A are mixed in one of the possible compositions and are ground together until the particle size of component A has a portion of 80 to 100% by weight smaller than 50 µm, in particular a portion of 97 to 100% by weight smaller than 45 µm, in that thereafter component B with an average particle size between 25 and 800 µm, preferably between 25 and 200 µm, is added to component A, and in that component A and component B are then mixed together and homogenized.

3. Method for the manufacture of a corundum porcelain material according to claim 1, characterized in that the raw materials of component A are mixed in one of the possible compositions and are ground to a particulate size, in that 97 to 100% by weight of the particles are smaller than 45 µm, in that component B is added to component A in a particle size up to 2000 µm, and in that a joint grinding of the two components to a particulate size then takes place until 80 to 98% by weight of the mixture are smaller than a particle size of 45 µm.

4. Method for the manufacture of a corundum porcelain material according to one of claims 1 to 3, characterized in that the raw materials of component A have the following grain distribution: aluminium oxide: 50 to 100% by volume of 2 to 10 µm, quartz: 50 to 100% by volume ≤ 10 µm, vitrifiers: 50 to 100% by volume ≤ 10 µm.

5. Method for the manufacture of a corundum porcelain material according to claim 1, characterized in that component A and component B are mixed together in one of the possible weight ratios, in that the average particle size of component B is 2 to 10 times as large as the average particle size of component A, and in that both components are ground together until 80 to 98% by weight of the mixture of the two components have a particle size which lies below 45 µm.

6. Method for the manufacture of a corundum porcelain material according to claim 5, characterized in that the particle size of component B, when added before the grinding, amounts to ≤ 2000 µm.

7. Method for the manufacture of a corundum porcelain material according to one of claims 1 to 6, characterized in that the clay substance of component A is added completely or in a partial quantity together with component B to the remaining raw materials of component A or is only added to the raw materials of component A after the addition of component B.

8. Method for the manufacture of a corundum porcelain material according to one of claims 1 to 7, characterized in that the fragments of component B consist of corundum porcelain.

9. Use of the corundum porcelain material according to claim 1, for the manufacture of sintered bodies, preferably insulators, in particular high-voltage insulators.

## Revendications

1. Masse pour porcelaine alumineuse comprenant comme matières de départ minérales, des matières premières céramiques, appelées composant A, et des débris de porcelaine broyés, appelés composant B, caractérisée par le fait que le composant A représente de 60 à 92 % en poids et le composant B de 8 à 40 % en poids par rapport au poids total de l'ensemble des matières de départ minérales à l'état sec, le composant A contenant, comme matières premières, de 8 à 70 % en poids d'alumine, de 20 à 70 % en poids de matières argileuses, de 10 à 50 % en poids de substances vitrifiables et de 0 à 30 % en poids de quartz, rapporté au poids total des matières de départ minérales du composant A à l'état sec, et que l'analyse chimique du mélange des composants A et B révèle de 20 à 75 % en poids de SiO₂, de 15 à 80 % en poids de Al₂O₃ et de 2 à 10 % en poids de fondants du groupe formé par K₂O, Na₂O, FeO, MgO, CaO, Li₂O, BaO, SrO, ZnO et fluorure, et que le mélange du composant A présente, avant cuisson, une distribution granulométrique telle que de 80 à 100 % en poids des particules ont une taille inférieure à 50 µm, en particulier une distribution telle que de 97 à 100 % en poids des particules ont une taille inférieure à 45 µm, et que le composant B a une taille moyenne de particules comprise entre 25 et 800 µm.

2. Procédé pour la préparation d'une masse pour porcelaine alumineuse selon la revendication 1, caractérisé par le fait que l'on mélange les matières premières formant le composant A suivant une composition possible, et qu'on les broie conjointement jusqu'à ce que de 80 à 100 % en poids des particules du composant A aient une taille inférieure à 50 µm, en particulier jusqu'à ce que de 97 à 100 % en poids aient une taille inférieure à 45 µm, que l'on ajoute ensuite au composant A le composant B ayant une taille moyenne de particules comprise entre 25 et 800 µm, de préférence entre 25 et 200 µm, et que l'on mélange ensuite le composant A et le composant B jusqu'à homogénéité.

3. Procédé de préparation d'une masse pour porcelaine alumineuse selon la revendication 1, caractérisé par le fait que l'on mélange les matières premières formant le composant A suivant l'une des compositions possibles et qu'on les broie jusqu'à ce que de 97 à 100 % en poids des particules aient une taille inférieure à 45 µm, que l'on ajoute au composant A le composant B constitué de particules dont la taille peut atteindre 2000 µm, et que l'on procède ensuite à un broyage commun des deux composants jusqu'à ce que de 80 à 98 % en poids des particules du mélange aient une taille inférieure à 45 µm.

4. Procédé de préparation d'une masse pour porcelaine alumineuse selon l'une des revendications 1 à 3, caractérisé par le fait que les matières premières formant le composant A ont les distributions granulométriques suivantes :
- alumine : 50 à 100 % en volume de particules ayant une taille comprise entre 2 et 10 µm,
- quartz : de 50 à 100 % en volume de particules ayant une taille inférieure ou égale à 10 µm,
- matière vitrifiable : de 50 à 100 % en volume de particules ayant une taille inférieure ou égale à 10 µm.

5. Procédé de préparation d'une masse pour porcelaine alumineuse selon la revendication 1, caractérisé par le fait que l'on mélange le composant A et le composant B suivant l'une des compositions possibles, que la taille moyenne des particules du composant B est de 2 à 10 fois supérieure à la taille moyenne des particules du composant A et que les deux composants sont broyés conjointement jusqu'à ce que de 80 à 98 % en poids des particules du mélange des deux composants aient une taille de particules inférieure à 45 µm.

6. Procédé de préparation d'une masse pour porcelaine alumineuse selon la revendication 5, caractérisé par le fait que la taille des particules du composant B lors de l'addition, avant broyage, est inférieure ou égale à 2000 µm.

7. Procédé de préparation d'une masse pour porcelaine alumineuse selon une des revendications 1 à 6, caractérisé par le fait qu'une partie ou la totalité des matières argileuses du composant A est introduite en même temps que le composant B, aux autres matières premières du composant A, ou qu'on l'ajoute seulement après addition du composant B aux matières premières du composant A.

8. Procédé pour la préparation d'une masse pour porcelaine alumineuse selon l'une des revendications 1 à 7, caractérisé par le fait que les débris du composant B sont constitués de porcelaine alumineuse.

9. Utilisation de la masse pour porcelaine alumineuse selon la revendication 1 pour la fabrication de pièces frittées, de préférence d'isolateurs, en particulier d'isolateurs pour haute tension.
